# EUROPEAN PATENT SPECIFICATION

(11) **EP 1 970 111 B1**
(45) Date of publication and mention of the grant of the patent: **21.07.2010**
(21) Application number: 08152129.6
(22) Date of filing: 29.02.2008
(51) Int. Cl.: B01D 29/01, D01D 5/098

(54) **Composite filter media**
Verbundstofffiltermedien
Support de filtre composite

(30) Priority: 05.03.2007 US 893008 P; 22.08.2007 US 843228
(43) Date of publication of application: 17.09.2008
(73) Proprietor: BHA Group, Inc, Kansas City, MO 64133 (US); E.I. DU PONT DE NEMOURS AND COMPANY, Wilmington, DE 19898 (US)
(72) Inventor: SMITHIES, Alan, Overland Park, KS 66213 (US); CLEMENTS, Jack Thomas, Lee's Summit, MO 64064 (US); MEI, Jason, Overland Park, KS 66211 (US); LIM, Hyun Sung, Midlothian, VA 23113 (US); JONES, David Charles, Midlothian, VA 23113 (US)
(74) Representative: Bedford, Grant Richard

(56) References cited:
- WO-A-03/080905
- WO-A-2006/071979
- DE-A1-102005 029 606
- DE-U1-202004 009 899
- US-A1- 2003 010 002

## Description

This invention relates generally to a composite nonwoven filter media, and more particularly, to a corrugated dry laid nonwoven filter media having a surface treated with a nanofiber based membrane.

Some known filter media composite constructs incorporate a wet-laid paper making process to produce the substrate, and an electro-spun technology to deposit a lightweight nanofiber coating on one or both sides of the filter media substrate. Typically the media substrate has a basis weight of 100-120 grams per square meter (g/m²), and the nanofiber layer has a basis weight of 0.5 g/m² or less.

The WO-A-2006071979 describes the formation by electroblowing of a nanofiber membrane on a support which is wet laid, followed by pleating the composite.

It is known that the lightweight nanofiber layer is vulnerable to damage in high mechanical stress applications, especially because the nanofiber layer is formed from fibers with diameters less than 500 nanometer (nm). After the nanofiber layer is damaged, dust is permitted to penetrate the base media and contribute to a rise in the operating pressure drop of the filter. Further, known media substrates also have mechanical stress limitations and are prone to deformation under high dust loading.

In one aspect according to the present invention, a composite filter media structure is provided. The composite filter media structure includes a corrugated base substrate that includes a nonwoven synthetic fabric formed by a dry-laid process that corrugates the base substrate during the forming process. The composite filter media structure also includes a nanofiber membrane deposited on at least one side of the base substrate by an electro-blown spinning process.

A method of making a composite filter media is provided. The method includes providing a nonwoven fabric mat that includes synthetic fibers and a binding agent, heating a nonwoven fabric mat to a temperature of about 90°C to about 240°C to soften the binding agent and bind the synthetic fibers together to form a nonwoven fabric, passing the fabric through opposed profiled calendar rolls to corrugate the nonwoven fabric, and applying a nanofiber layer by electro-blown spinning a polymer solution to form a plurality of nanofibers on at least one side of the nonwoven fabric to form the composite filter media.

In another aspect, a filter element is provided. The filter element includes a first end cap, a second end cap, and a composite filter media structure. The composite filter media structure includes a corrugated base substrate that includes a nonwoven synthetic fabric formed by a dry-laid process that corrugates the base substrate during the forming process, and a nanofiber membrane deposited on at least one side of the base substrate by an electro-blown spinning process.

Various aspects and embodiments of the present invention will now be described in connection with the accompanying drawings, in which:
Figure 1 is cross sectional illustration of an exemplary embodiment of a composite filter media.
Figure 2 is a side illustration of a filter cartridge that includes the filter media shown in Figure 1.
Figure 3 is an enlarged perspective illustration of a portion of the filter cartridge shown in Figure 2.
Figure 4 is a perspective illustration of a filter assembly that includes the filter cartridge shown in Figure 2.
Figure 5 is a graph of differential pressure versus time of a filter cartridge in accordance with an exemplary embodiment compared to a known filter cartridge.

A composite filter media for filter assemblies is described in detail below. The composite filter media includes a corrugated media substrate of a synthetic nonwoven fabric that is formed by a dry-laid process. In alternate embodiments, the nonwoven fabric can be formed from dry and wet laid staple synthetic and natural fibers. A nanofiber membrane layer is deposited on at least one side of the media substrate by an electro blowing process. The composite filter media is more durable than known filter media and provides for lower pressure drop build-up because of less deflection of the filter media from the forces exerted on the filter media during the filtering and reverse cleaning operations. Also, the nanofiber membrane layer has a higher basis weight than known filter media which permits the filter media to clean down more effectively under reverse pulse cleaning than known filter media. Further, the high basis weight of the nanofiber layer provides for a durable three dimensional surface filtration layer which has an extensive tortuous path that permits high efficiency and fine particle capture without substantially restricting air flow or increasing pressure drop.

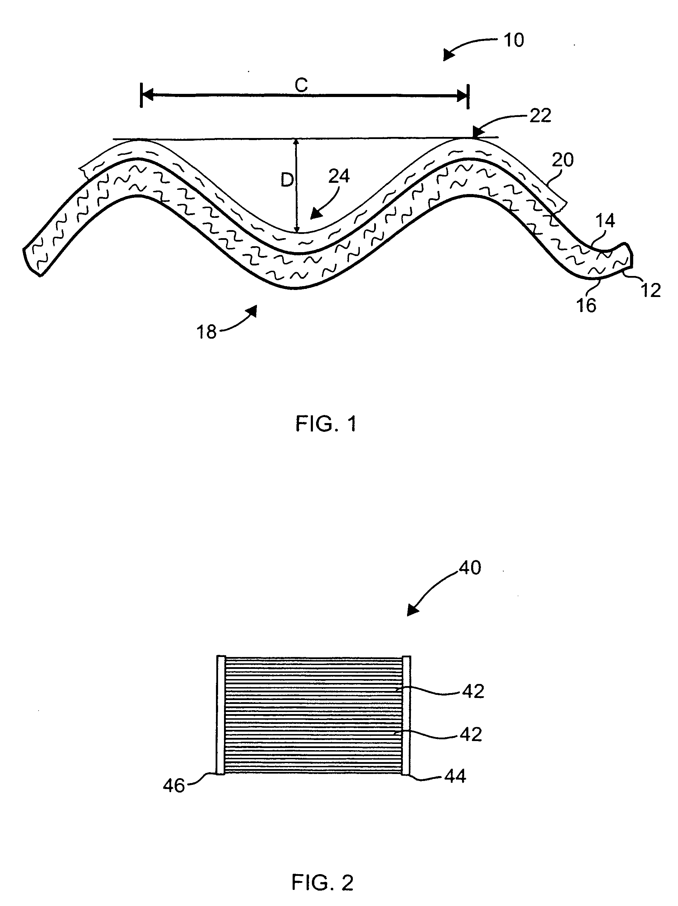

Referring to the drawings, Figure 1 is a sectional illustration of an exemplary embodiment of a filter media 10. Filter media 10 includes a base media substrate 12 having a first side 14 and a second side 16. A plurality of corrugations 18 are formed into media substrate 12. A nanofiber membrane layer 20 is deposited onto first side 14 of media substrate. In another embodiment, nanofiber membrane layer 20 is deposited onto second side 16, and in another embodiment, nanofiber membrane layer 20 is deposited on each of first and second sides 14 and 16.

Media substrate 12 is a nonwoven fabric formed from synthetic fibers using a dry-laid process. The nonwoven fabric, made of stretched synthetic fibers and a thermoplastic and/or thermally cross-linked binding agent, is heated in an oven to a temperature that is at least in the softening temperature range and/or the cross-linking temperature range of the binding agent. The nonwoven fabric is formed between profiled calender rolls and cooled simultaneously which yields a corrugated filter media with stability and shape-retaining properties.

The nonwoven fabric can include bicomponent fibers having a thermoplastic fiber component added to the nonwoven fabric during its production. Suitable bicomponent fibers are fibers having a core structure, a sheath structure, an island structure or a side-by-side structure. The bicomponent fibers may be introduced into the formed fabric by mixing the fiber components during the formation of the nonwoven fabric. By heating in an oven, the thermoplastic component of the bicomponent fibers is softened or melted which binds the nonwoven fibers together. The temperature is selected so that at least softening or fusing of the bicomponent fibers occurs. In one embodiment, the temperature is about 90°C to about 240°C. The desired connection of the fibers is caused by the melting and re-solidification of the polymer while cooling in the calendar rolls.

The temperature of the calender rolls is selected to be below the softening temperature range of the binding agent/bicomponent fibers. In one embodiment, the temperature is about 70°C to about 150°C, in another embodiment, the temperature is about 80°C to about 90°C. The temperature of the calender roller cools the fabric so that durable corrugation is achieved. The temperature of the calender rolls and the residence time of the nonwoven fabric between the calender rolls is chosen corresponding to the binding agent.

In the exemplary embodiment, corrugations 18 are formed as a sine-shaped wave in the media substrate 12. The wave crests 22 and troughs 24 are arranged in the direction of travel of the web of substrate through the forming equipment. Troughs 24 have an effective depth D of at least about 0.5 mm (0.02 inch) to permit breathability of filter media 10 at high dust loading to maintain low differential pressure, below about 7.5 torr (4 inches water column (wc)). A corrugation pitch C in the exemplary embodiment is about 3 to about 10 corrugations per inch (about 1.2 to about 3.9 corrugations per cm), and in another embodiment, from about 3 to about 6 corrugations per inch (about 1.2 to about 2.4 corrugations per cm). The combination of effective depth D and corrugation pitch C permit optimization of touch points which prevents pleat collapse under high static pressure from high air velocities and dust loadings.

Opposing profiled calender rolls produce a uniform corrugation over the entire cross-section of media substrate 12, and also produce a substantially uniform thickness. In other embodiments, the nonwoven fabric is submitted to an increased compression at predefined areas of the cross-section, so as to achieve a greater stiffness in the filter material at these locations by modifying the profile of the calender rolls.

The profile of the calender rolls is wave-shaped, the crest of one calender roll being aligned with the trough of the opposing calender roll. The clearance of the individual calender rolls from each other is selected so that the nonwoven fabric is not fully compressed and so that there is a clearance between the calendar rolls for the cross-section of the nonwoven fabric. This clearance determines the thickness of media substrate 12 upon exiting the calender rolls. In one embodiment, the basis weight of media substrate 12 is about 100 g/m² to about 300 g/m², and in another embodiment, about 170 g/m² to about 240 g/m².

Any suitable synthetic fiber can be used to make the nonwoven fabric of media substrate 12. Suitable fibers include, but are not limited to, polyester fibers, polyamid fibers, polyolefin fibers, thermoplastic polyurethane fibers, polyetherimide fibers, polyphenyl ether fibers, polyphenylene sulfide fibers, polysulfone fibers, aramid fibers, and mixtures thereof.

Nanofiber membrane layer 20 is formed by an electro-blown spinning process that includes feeding a polymer solution into a spinning nozzle, applying a high voltage to the spinning nozzle, and discharging the polymer solution through the spinning nozzle while injecting compressed into the lower end of the spinning nozzle. The applied high voltage ranges from about 1 kV to about 300 kV. The electro-blown spinning process of forming nonofibers and the unique apparatus used is described in detail in U.S. Patent Application Publication No. 2005/00677332. The electro-blown spinning process provides a durable three dimensional filtration layer of nanofibers that is thicker than known nanofiber filtration layers on known filter media. In the exemplary embodiment the basis weight of nanofiber membrane layer 20 is about 0.6 g/m² to about 20 g/m², in another embodiment, about 5 g/m² to about 10 g/m². The nanofibers in nanofiber membrane layer 20 have an average diameter of about 500 nm or less.

Suitable polymers for forming nanofibers by the electro-blown spinning process are not restricted to thermoplastic polymers, and may include thermosetting polymers. Suitable polymers include, but are not limited to, polyimides, polyamides (nylon), polyaramides, polybenzimidazoles, polyetherimides, polyacrylonitriles, polyethylene terephthalate, polypropylene, polyanilines, polyethylene oxides, polyethylene naphthalates, polybutylene terephthalate, styrene butadiene rubber, polystyrene, polyvinyl chloride, polyvinyl alcohol, polyvinylidene chloride, polyvinyl butylene and copolymer or derivative compounds thereof. The polymer solution is prepared by selecting a solvent that dissolves the selected polymers. The polymer solution can be mixed with additives, for example, plasticizers, ultraviolet ray stabilizers, crosslink agents, curing agents, reaction initiators, and the like. Although dissolving the polymers may not require any specific temperature ranges, heating may be needed for assisting the dissolution reaction.

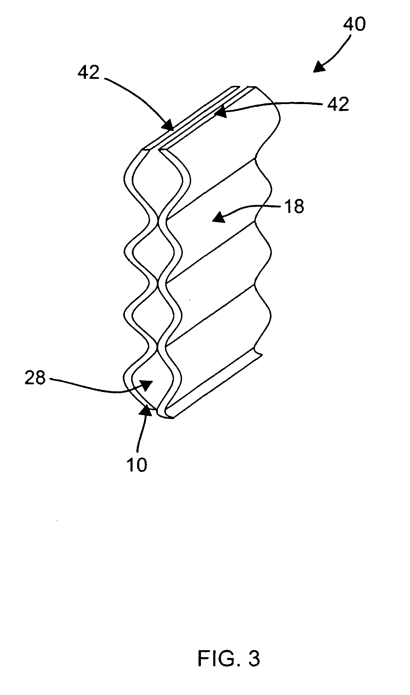

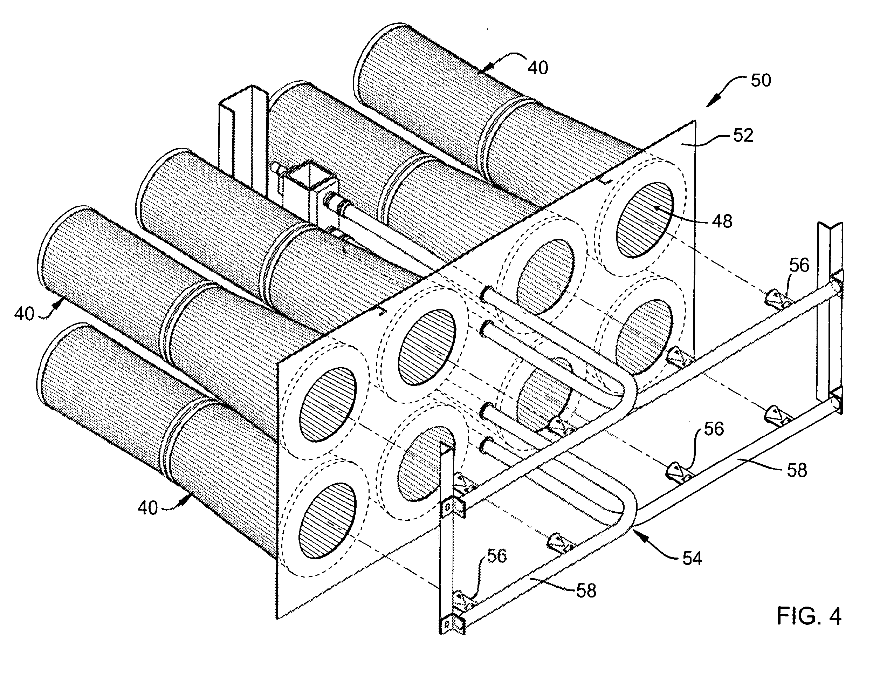

Figure 2 is a side illustration of a filter element 40 formed from filter media 10. In the exemplary embodiment, filter media 10 includes a plurality of pleats 42 arranged so that corrugations 18 act as spacers between pleats 42. Filter element 40 includes a first end cap 44 and an opposing second end cap 46 with filter media 10 extending between end caps 44 and 46. Filter element 40 has a tubular shape with an interior conduit 48 (shown in Figure 4). Filter element 40 is cylindrical in shape, but can also be conical as shown in Figure 4. Filter element 40 can also include an inner and/or an outer support liner to provide structural integrity of filter element 40 and/or support for filter media 10. As shown in Figure 3, corrugations 18 in adjacent pleats 42 of filter element 40 define oval tubes 28 which permit filtered air to flow through filter element 40.

Figure 4 is a perspective illustration of a filter assembly 50 that includes a plurality of filter elements 40 mounted to a tube sheet 52 in pairs in an end to end relationship. Tube sheet 52 separates the dirty air side 50 from the clean air side of filter assembly. A cleaning system 54 for cleaning filter elements 40 with pulsed air includes a plurality of air nozzles 56 mounted to air supply pipes 58. Pulses of compressed air directed into interior conduit 48 of filter elements 40 are used to clean filter elements 40 of collected dirt and dust.

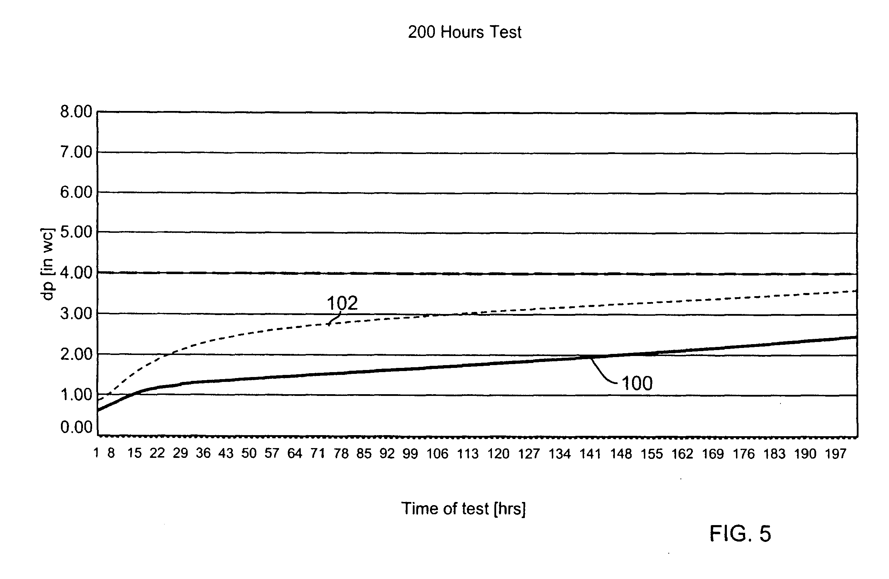

Filter element 40 was compared to a filter element formed from base media substrate 12 (without nanofiber layer 20) in a 200 hour duration dust rejection test. Dust laden air was directed into a test filter module having a capacity of at least 16.4 L/S (3,000 CFM) with the dust concentration feed rate of 0.57 g/m³. The test filters were pulse-jet cleaned at a predetermined cycle time at a pulse air pressure of 700 kPa gauge (100 psig). The test filter module differential pressure was monitored throughout the 200 hour test duration. The 200 hour test procedure is described in the Saudi Aramco Materials System Specification 32-SAMSS-008, titled INLET AIR FILTRATION SYSTEMS FOR COMBUSTION GAS TURBINES, issued October 26, 2005, Apendix II, phase 2. Figure 5 shows a graphical representation of the test results over the 200 hour duration. Line 100 represents the differential pressure of filter element 40 and line 102 represents the differential pressure of the filter element formed only from base media substrate 12 over the 200 hour test duration. Filter element 40 has a lower differential pressure than the filter element formed only from base media substrate 12 for the entire duration of the test.

The above described filter elements 40 formed from filter media 10 can be used for filtering an air stream in almost any application, for example, for filtering gas turbine inlet air. The unique construction of filter media 12 is more durable than known filter media and provides for lower pressure drop build-up because of less deflection from the forces exerted on the filter media during the filtering and reverse cleaning operations. Also, nanofiber membrane layer 20 has a higher basis weight than known filter media which permits filter media 12 to clean down more effectively under reverse pulse cleaning than known filter media. Further, the high basis weight of nanofiber layer 20 provides for a durable three dimensional surface filtration layer which has an extensive tortuous path that permits high efficiency and fine particle capture without restricting air flow or increasing pressure drop.

## Claims

1. A composite filter media structure (10) comprising:
a corrugated base substrate (12) comprising a nonwoven synthetic fabric formed by a dry-laid process that corrugates said base substrate during the forming process; and
a nanofiber membrane (20) deposited on one side of said base substrate by an electro-blown spinning process.

2. A composite filter media structure (10) in accordance with Claim 1 wherein said nonwoven fabric comprises a plurality of fibers, said fibers comprising at least one of polyester fibers, polyamid fibers, polyolefin fibers, thermoplastic polyurethane fibers, polyetherimide fibers, polyphenyl ether fibers, polyphenylene sulfide fibers, polysulfone fibers, and aramid fibers.

3. A composite filter media structure (10) in accordance with any preceding Claim wherein said base substrate (12) has a basis weight of about 100 g/m² to about 300 g/m².

4. A composite filter media structure (10) in accordance with any preceding Claim comprising a corrugation pitch of about 1.2 to about 3.9 corrugations per cm, said corrugations having an effective trough depth of about 0.5 mm.

5. A composite filter media structure (10) in accordance with any preceding Claim wherein said nanofiber membrane (20) comprises a plurality of nanofibers having an average diameter of about 500 nm or less.

6. A composite filter media structure (10) in accordance with any preceding Claim wherein said nanofiber membrane (20) has a basis weight of about 0.6 g/m² to about 20 g/m².

7. A composite filter media structure (10) in accordance with any preceding Claim wherein said nanofiber membrane (20) comprises a plurality of nanofibers, said nanofibers formed from polymers utilizing the electro-blown spinning process, said polymers comprising at least one of polyimides, polyamides, polyaramides, polybenzimidazoles, polyetherimides, polyacrylonitriles, polyethylene terephthalate, polypropylene, polyanilines, polyethylene oxides, polyethylene naphthalates, polybutylene terephthalate, styrene butadiene rubber, polystyrene, polyvinyl chloride, polyvinyl alcohol, polyvinylidene chloride, polyvinyl butylenes, and copolymer or derivative compounds thereof.

8. A composite filter media structure (10) in accordance with any preceding claim further comprising a plurality of pleats (42).

9. A filter element (40) comprising a first end cap (44), a second end cap (46), and a composite filter media structure (10), the composite filter media structure comprising:
a corrugated base substrate (12) comprising a nonwoven synthetic fabric formed by a dry-laid process that corrugates said base substrate during the forming process; and
a nanofiber membrane (20) deposited on at least one side of said base substrate by an electro-blown spinning process.

10. A filter element (40) in accordance with Claim 9 wherein said base substrate (12) has a basis weight of about 100 g/m² to about 300 g/m².

## Patentansprüche

1. Verbundstoff-Filtermedienstruktur (10), umfassend:
ein gewelltes Grundsubstrat (12), umfassend einen synthetischen Vliesstoff, der durch ein Trockenlegeverfahren gebildet ist, das das Grundsubstrat während des Formverfahrens mit Wellen versieht, und
eine Nanofasermembran (20), die durch ein elektrisches Blasspinnverfahren auf einer Seite des Grundsubstrates abgeschieden ist.

2. Verbundstoff-Filtermedienstruktur (10) nach Anspruch 1, wobei der Vliesstoff eine Vielzahl von Fasern umfasst, wobei diese Fasern mindestens eines von Polyesterfasern, Polyamidfasern, Polyolefinfasern, thermoplastischen Polyurethanfasern, Polyetherimidfasern, Polyphenyletherfasern, Polyphenylensulfidfasern, Polysulfonfasern und Aramidfasern umfassen.

3. Verbundstoff-Filtermedienstruktur (10) nach irgendeinem vorhergehenden Anspruch, wobei das Grundsubstrat (12) ein Basisgewicht von etwa 100 g/m² bis etwa 300 g/m² aufweist.

4. Verbundstoff-Filtermedienstruktur (10) nach irgendeinem vorhergehenden Anspruch, umfassend eine Wellenteilung von etwa 1,2 bis etwa 3,9 Wellen pro cm, wobei diese Wellen eine effektive Trogtiefe von etwa 0,5 mm haben.

5. Verbundstoff-Filtermedienstruktur (10) nach irgendeinem vorhergehenden Anspruch, worin die Nanofasermembran (20) eine Vielzahl von Nanofasern mit einem mittleren Durchmesser von etwa 500 nm oder weniger umfasst.

6. Verbundstoff-Filtermedienstruktur (10) nach irgendeinem vorhergehenden Anspruch, wobei die Nanofasermembran (20) ein Basisgewicht von etwa 0,6 g/m² bis etwa 20 g/m² aufweist.

7. Verbundstoff-Filtermedienstruktur (10) nach irgendeinem vorhergehenden Anspruch, wobei die Nanofasermembran (20) eine Vielzahl von Nanofasern umfasst, wobei diese Nanofasern aus Polymeren unter Benutzung des elektrischen Blasspinnverfahrens gebildet sind, wobei die Polymeren mindestens eines von Polyimiden, Polyamiden, Polyaramiden, Polybenzimidazolen, Polyetherimiden, Polyacrylnitrilen, Polyethylenterephthalat, Polypropylen, Polyanilinen, Polyethylenoxiden, Polyethylennaphthalaten, Polybutylenterephthalat, Styrolbutadienkautschuk, Polystyrol, Polyvinylchlorid, Polyvinylalkohol, Polyvinylidenchlorid, Polyvinylbutylenen und Copolymer oder Derivatverbindungen davon umfassen.

8. Verbundstoff-Filtermedienstruktur (10) nach irgendeinem vorhergehenden Anspruch, weiter umfassend eine Vielzahl von Falten (42).

9. Filterelement (40) umfassend eine erste Endkappe (44), eine zweite Endkappe (46) und eine Verbundmaterial-Filtermedienstruktur (10), wobei die Verbundmaterial-Filtermedienstruktur (10) umfasst:
ein gewelltes Grundsubstrat (12), umfassend einen synthetischen Vliesstoff, der durch ein Trockenlegeverfahren gebildet ist, das das Grundsubstrat während des Formverfahrens mit Wellen versieht und
eine Nanofasermembran (20), die durch ein elektrisches Blasspinnverfahren auf mindestens einer Seite des Grundsubstrates abgeschieden ist.

10. Filterelement (40) nach Anspruch 9, wobei das Grundsubstrat (12) ein Basisgewicht von etwa 100 g/m² bis etwa 300 g/m² aufweist.

## Revendications

1. Structure de couche filtrante composite (10), comprenant :
- un substrat de base ondulé (12), comprenant un tissu synthétique non-tissé produit par voie sèche, suivant un procédé de fabrication au cours duquel ledit substrat de base est doté d'ondulations ;
- et une membrane en nanofibres (20), déposée sur un seul côté dudit substrat de base, suivant un procédé d'électrofilage avec soufflage.

2. Structure de couche filtrante composite (10), conforme à la revendication 1, dans laquelle ledit tissu non-tissé comprend de multiples fibres qui comprennent des fibres d'au moins un type choisi parmi les suivants : fibres de polyester, fibres de polyamide, fibres de polyoléfine, fibres de polyuréthane thermoplastique, fibres de polyéther-imide, fibres de poly(phénylène oxyde), fibres de poly(phénylène sulfure), fibres de polysulfone et fibres d'aramide.

3. Structure de couche filtrante composite (10), conforme à l'une des revendications précédentes, dans laquelle ledit substrat de base (12) présente un poids surfacique d'environ 100 g/m² à environ 300 g/m².

4. Structure de couche filtrante composite (10), conforme à l'une des revendications précédentes, dans laquelle le pas d'ondulation est d'environ 1,2 à environ 3,9 ondulations par centimètre, lesquelles ondulations présentent des creux d'environ 0,5 mm de profondeur effective.

5. Structure de couche filtrante composite (10), conforme à l'une des revendications précédentes, dans laquelle ladite membrane en nanofibres (20) comprend de multiples nanofibres dont le diamètre moyen est inférieur ou égal à environ 500 nm.

6. Structure de couche filtrante composite (10), conforme à l'une des revendications précédentes, dans laquelle ladite membrane en nanofibres (20) présente un poids surfacique d'environ 0,6 g/m² à environ 20 g/m².

7. Structure de couche filtrante composite (10), conforme à l'une des revendications précédentes, dans laquelle ladite membrane en nanofibres (20) comprend de multiples nanofibres, lesquelles nanofibres ont été formées à partir de polymères suivant un procédé d'électrofilage avec soufflage, lesquels polymères comprennent au moins l'un des suivants :
polyimides, polyamides, polyaramides, polybenzimidazoles, polyétherimides, polyacrylonitriles, poly(éthylène téréphtalate), polypropylènes, polyanilines, poly(éthylène oxyde), poly(éthylène naphtalate), poly(butylène téréphtalate), caoutchoucs de styrène et butadiène, polystyrène, poly(chlorure de vinyle), poly(alcool vinylique), poly(chlorure de vinylidène), poly(butyral de vinyle), et copolymères ou dérivés de tels polymères.

8. Structure de couche filtrante composite (10), conforme à l'une des revendications précédentes, qui en outre comprend plusieurs plis (42).

9. Elément filtrant (40), comprenant un premier capuchon d'extrémité (44), un deuxième capuchon d'extrémité (46), et une structure de couche filtrante composite (10), laquelle structure de couche filtrante composite comprend :
- un substrat de base ondulé (12), comprenant un tissu synthétique non-tissé produit par voie sèche, suivant un procédé de fabrication au cours duquel ledit substrat de base est doté d'ondulations ;
- et une membrane en nanofibres (20), déposée sur un seul côté dudit substrat de base, suivant un procédé d'électrofilage avec soufflage.

10. Elément filtrant (40), conforme à la revendication 9, dans lequel ledit substrat de base (12) présente un poids surfacique d'environ 100 g/m² à environ 300 g/m².
